# NEUE EUROPÄISCHE PATENTSCHRIFT

(11) **EP 2 474 787 B2**
(45) Veröffentlichungstag und Bekanntmachung des Hinweises auf die Entscheidung über den Einspruch: **22.06.2022**
(45) Hinweis auf die Patenterteilung: 12.10.2016
(21) Anmeldenummer: 12002606.7
(22) Anmeldetag: 13.04.2012
(51) Int. Cl.: F24C 15/32, F24C 15/20, F24C 7/08, A21B 3/04, F24C 15/34

(54) **Dampfgargerät**
Steam cooking device
Appareil de cuisson à vapeur

(43) Veröffentlichungstag der Anmeldung: 11.07.2012
(73) Patentinhaber: V-Zug AG, 6300 Zug (CH)
(72) Erfinder: Frey Ulrich, 8912 Obfelden (CH)
(74) Vertreter: Toleti, Martin

(56) Entgegenhaltungen:
- EP-A1- 1 855 058
- EP-B1- 1 847 203
- WO-A2-03/023285
- DE-A1- 4 225 696
- US-A1- 2011 168 690

## Beschreibung

### Gebiet der Erfindung

Die Erfindung betrifft ein Gargerät zum Garen von Gargut und ein Verfahren zum Betreiben eines Gargerätes.

### Hintergrund

Dampfgargeräte erfreuen sich zunehmender Beliebtheit ob Ihrer das Gargut schonenden Garweise. Dabei wird einem Garraum Dampf zugeführt, um den Garraum und das darin befindliche Gargut zu erwärmen.

Die WO 03/023285 A2 zeigt ein Gargerät, bei dem ein Dampfüberschuss im Garraum wirksam abtransportiert werden soll. Im Garraum sind ein Gebläse und Heizschlangen angeordnet. Ausserhalb des Garraums ist eine sogenannte Druckkammer vorgesehen, die. über eine erste Leitung an eine externe Wasserversorgung angeschlossen ist, und die über einen Einlass mit der Gehäuseumgebung verbunden ist. Eine weitere Leitung führt aus dem Inneren der Druckkammer in ein Gebiet innerhalb des Gebläses. Ferner ist die Druckkammer über eine dritte Leitung mit einem Kondenswasserreservoir verbunden. Im Betrieb wird zur Dampferzeugung die erste Leitung mit Wasser beaufschlagt, wodurch sich die Druckkammer füllt. Erreicht das Niveau des Wassers in der Druckkammer die Mündung der zweiten Leitung, so wird dem Gebläse Wasser zugeführt und dort zersteubt, sodass das zersteubte Wasser mit Hilfe der Heizschlangen zu Dampf umgewandelt wird. Ist genügend oder zuviel Dampf im Garraum, wird die Wasserversorgung abgestellt. Das Wasser in der Druckkammer sinkt auf/unter das Niveau der Mündung der Leitung. So saugt das Gebläse im Garraum über die zweite Leitung und den Einlass nun Luft an, die über das Gebläse im Garraum verteilt wird. Über die dritte Leitung wird Kondenswasser aus der Druckkammer dem Kondenswasserreservoir zugeführt.

In der DE 42 25 696 A1 weist ein Gerät für die Wärmebehandlung von Nahrungsmitteln ein Gehäuse auf, in dem durch eine Trennwand ein Behandlungsraum und ein Installationsraum voneinander getrennt werden. Im Behandlungsraum sind eine Heizung und ein Gebläse für das Erwärmen und Umwälzen der Luft für die Wärmebehandlung der Nahrungsmittel angeordnet. Im Installationsraum ist ein Dampferzeuger angeordnet, der unabhängig von der Heizung im Behandlungsraum den für die Behandlung der Nahrungsmittel bedarfsweise benötigten Dampf erzeugt und in den Behandlungsraum abgibt. In der Verbindungsleitung zwischen dem Dampferzeuger und dem Behandlungsraum ist der Messwertaufnehmer eines Strömungsmessers angeordnet, mittels dessen der Dampferzeuger und damit die Dampfmenge für den Behandlungsraum gesteuert wird. Der Messwertaufnehmer ist vorzugsweise als Staurohr ausgebildet.

Die US 2011/0168690 A1 zeigt ein Gargerät, mit einem Dampferzeuger. Dieser Dampf wird in die Nähe eines Gebläses geführt, das die Aufgabe hat, Luft aus dem Garraum hin zu einem Heizer zu fördern, welche Luft dort erhitzt und wieder in den Garraum rückgeführt wird. Über einen Auslass aus dem Garraum kann Dampf entweichen. Durch ein weiteres Gebläse kann dem Garraum Frischluft zugeführt werden. Der Dampfgenerator wird ausgeschaltet, sobald mittels eines Sensors im Zuführkanal oder bei Überschreiten einer im Garraum gemessenen Temperatur erkannt wird, dass kein Dampf mehr produziert wird. Dennoch wird der Garprozess weitergeführt, dann aber nur noch mit dem Heizer als Wärmequelle.

Die EP 1 855 058 A1 zeigt ein Dampfgargerät mit einem Dampfgenerator, welcher einem Garraum Dampf zuführt. Eine Heizung erlaubt es, den Dampf im Garraum auf über 100°C zu überhitzen. Am Garraum ist eine Messöffnung angeordnet, an deren äusserer Mündung sich ein Temperatursensor befindet. Übersteigt die Temperatur am Temperatursensor eine Schwelle, so wird eine zweite Öffnung am Garraum geöffnet, durch welche Gas aus dem Garraum abgesogen wird.

### Darstellung der Erfindung

Aufgabe der Erfindung ist es, einen Garprozess und ein Gargerät anzugeben, die den vorgestellten Dampfgarbetrieb in energieeffizienter Weise weiter entwickeln.

Die Aufgabe wird gelöst durch ein Gargerät mit den Merkmalen des Patentanspruchs 1 und durch ein Verfahren zum Betreiben eines Gargeräts nach den Merkmalen des Patentanspruchs 10.

Das Gargerät weist einen Garraum zur Aufnahme eines Gargutes auf. Garen im Kontext dieser Erfindung soll alle Arten des Erwärmens des Gargutes umfassen, also das Erwärmen, das Erhitzen, wie auch das Auftauen von Lebensmitteln, Speisen, Flüssigkeiten, etc.. Der Garraum ist typischerweise ein einseitig offener Hohlkörper, im Kontext von Backöfen auch Muffel genannt, dessen offene Seite mit einer Türe verschliessbar ist. Es ist ferner ein Dampferzeuger vorgesehen, der ein Zuführen von Dampf, insbesondere Wasserdampf, in den Garraum erlaubt. Dabei seien externe Dampferzeuger mit eingeschlossen, die Dampf ausserhalb des Garraums erzeugen, welcher Dampf dann über eine Zuleitung in den Garraum eingeleitet wird. Der beanspruchte Dampferzeuger soll aber auch interne Dampferzeuger mit umfassen, bei denen der Dampf innerhalb des Garraums, beispielsweise durch Erhitzen von Wasser, erzeugt wird.

Ferner weist das Gargerät eine Öffnung im Garraum auf, die das Austreten von Dampf aus dem Garraum ermöglicht. Diese Öffnung ist also insbesondere als zusätzlich zur Türöffnung vorgesehene Öffnung zu verstehen, die einen Austritt von Dampf auch bei geschlossener Türe ermöglicht. Eine solche Öffnung mag beispielsweise einen etwa münzgrossen Querschnitt aufweisen.

Es ist eine elektronische Steuerung für den Betrieb des Gargeräts vorgesehen. Diese Steuerung empfängt unter anderem das Signal eines Sensors, der einen Parameter von aus der Öffnung austretendem Dampf misst. Dieser Parameter kann die Temperatur des austretenden Dampfs sein für den Fall, dass der Sensor als Temperatursensor ausgebildet ist. Dieser Parameter kann der Durchfluss des austretenden Dampfs sein für den Fall, dass der Sensor als Flusssensor ausgebildet ist. Dieser Parameter kann der Druck des austretenden Dampfs sein für den Fall, dass der Sensor als Drucksensor ausgebildet ist. Dieser Parameter kann die Feuchte des austretenden Dampfs sein für den Fall, dass der Sensor als Feuchtesensor ausgebildet ist. Der Sensor kann ein kombinierter Sensor aus zwei oder mehreren der vorhergehenden Einzelsensoren sein und damit sein Messergebnis auf zwei oder mehr unterschiedliche physikalische Parameter abstützen.

Vorzugsweise ist der Sensor angeordnet an der Öffnung selbst oder aber in einem Hohlkörper, der über die Öffnung mit dem Garraum verbunden ist. Der Sensor kann dabei an einer Innenwand oder an einer Aussenwand des Hohlkörpers zum Messen des Parameters angeordnet sein. Der Sensor kann aber beispielsweise auch im Garraum selbst nahe der Öffnung angeordnet sein. Auch dort kann er einen Parameter von durch die Öffnung austretendem Dampf messen. Dabei mag der Sensor beispielsweise innerhalb eines Radius von höchstens 5 cm um die Öffnung herum angeordnet sein.

Bei diesen Sensoranordnungen wird nun anstelle einer mittelbaren Messung der Dampfsättigung im Garraum durch das Messen eines Parameters von aus dem Garraum austretendem Dampf ein direktes Mass für die Dampfsättigung im Garraum aufgenommen.

Alternativ kann der Sensor auch im Garraum selbst angeordnet sein zum Messen eines Parameters vom Dampf im Garraum. Es braucht hierbei also nicht notwendigerweise der Sensor einen Parameter des durch die Öffnung ausströmenden Dampfs zu messen sondern einen Parameter des Dampfs im Garraum selbst. Dieser Parameter kann wiederum die Temperatur des Dampfs im Garraum sein für den Fall, dass der Sensor als Temperatursensor ausgebildet ist. Dieser Parameter kann der Druck des Dampfs im Garraum sein für den Fall, dass der Sensor als Drucksensor ausgebildet ist. Dieser Parameter kann die Feuchte des Dampfs im Garraum sein für den Fall, dass der Sensor als Feuchtesensor ausgebildet ist. Der Sensor kann ein kombinierter Sensor aus zwei oder mehreren der vorhergehenden Einzelsensoren sein und damit sein Messergebnis auf zwei oder mehr unterschiedliche physikalische Parameter abstützen.

Der Garraum ist über den Hohlkörper mit einem Abluftschacht verbunden. Der Abluftschacht des Gargeräts ist bevorzugt über eine weitere, insbesondere verschliessbare Öffnung vorzugsweise ohne Zwischenschaltung eines weiteren Hohlkörpers mit dem Garraum verbunden. Bei Bedarf kann diese weitere Öffnung durch die Steuerschaltung geöffnet werden, sodass ebenfalls Dampf oder Wrasen aus dem Garraum in den Abluftschacht und von dort in die Umwelt entweichen kann. Der Abluftschacht ist dabei vorzugsweise oberhalb des Garraums angeordnet, und ist vorzugsweise horizontal ausgerichtet. Der Ablufttransport aus dem Garraum mag durch einen Lüfter unterstützt werden.

Der Hohlkörper, der einerseits mit der Öffnung im Abluftschacht und andererseits mit der Öffnung im Garraum verbunden ist, bildet so also eine Verbindung zwischen Garraum und Abluftschacht zum potentiellen Abtransport von Dampf oder Wrasen aus dem Garraum. Dabei weist der Hohlkörper ein Volumen auf, das grösser 40 cm3 ist, und in einer vorteilhaften Weiterbildung grösser als 100 cm3 ist. Der Hohlkörper kann aus unterschiedlichen Elementen zusammengesetzt sein, oder kann aus einem Stück geformt sein. Der Hohlkörper bildet also einen Behälter für aus dem Garraum austretendes Gas beispielsweise in Form von Wasserdampf. Dieser Hohlkörper ist nun als zumindest temporärer Speicher für das aus dem Garraum ausgetretene Gas vorgesehen. Dabei mag durch den Aufbau eines geeigneten Gegendrucks an der abluftschachtseitigen Öffnung erwirkt werden, dass zumindest ein Grossteil des in den Hohlkörper strömenden Gases, das im vorliegenden Fall Wasserdampf ist, nicht sofort durch die Öffnung des Abluftschachts in diesen weiterströmt sondern im Hohlkörper verbleibt. Das gespeicherte Gas kann im Betriebsverfahren des erfindungsgemässen Gargeräts in vorteilhafter Weise wiederverwendet werden, wie weiter unten gezeigt. Um den Hohlraum als möglichst wirksames Speicherelement einsetzen, mag der Hohlkörper thermisch isoliert sein gegen seine Umgebung, und insbesondere gegen gute Wärmeleiter in seiner Umgebung wie es etwa ein Gehäuse des Gargeräts ist, oder aber der Garraum. Eine solche thermische Isolierung kann beispielsweise eine Umhüllung des Hohlkörpers mit Glaswolle umfassen. Aber auch der Hohlkörper selbst kann bereits aus einem schlecht wärmeleitenden Material hergestellt sein, beispielsweise aus Kunststoff. Vorzugsweise kann zumindest ein Bestandteil des Hohlkörpers als biegsamer Schlauch ausgestaltet sein, dessen Schlauchmaterial bereits eine thermische Isolierung darstellt und vorzugsweise aus Kunststoff hergestellt ist.

In einer anderen Weiterbildung der Erfindung kann der Hohlkörper aber ein oder mehrere gut wärmespeichernde Elemente enthalten, wie beispielsweise Metallelemente. Hierbei wird die Speicherung der in dem Dampf im Hohlraum befindlichen Wärme unterstützt.

In einer weiteren vorteilhaften Weiterbildung der Erfindung ist die Öffnung vom Garraum zum Hohlkörper unten im Garraum angeordnet, also vorzugsweise in einer unteren Hälfte, vorzugsweise aber dem unteren Drittel einer Höhe der die Öffnung enthaltenden Seitenwand. In einer anderen Weiterbildung kann die Öffnung aber auch in einer oberen Hälfte des Garraums angeordnet sein, ebenfalls in einer Seitenwand, oder aber in der Decke des Garraums.

Ist dann der Abluftschacht horizontal oberhalb des Garraums angeordnet, so ist der Hohlkörper vorzugsweise vertikal im Gargerät ausgerichtet und stellt eine Verbindung dar zwischen der unten angeordneten Öffnung des Garraums und der oben angeordneten Öffnung des Abluftschachts. Ist der Abluftschacht horizontal über dem Garraum angeordnet, so weist er vorzugsweise einen Überstand gegenüber dem Garraum auf. An einer Unterseite des Überstands ist vorzugsweise die Öffnung des Abluftschachts angeordnet, die den Abluftschacht mit dem Hohlkörper verbindet. Der Abluftschacht kann aus Blechteilen oder Kunststoff gebildet sein und mag auch Gehäusebestandteile mit umfassen.

In einer weiteren Weiterbildung der Erfindung ist die Öffnung hin zum Hohlkörper in einer Decke des Garraums angeordnet. Da typischerweise bei einer solchen Anordnung des Hohlkörper weniger Platz für diesen zur Verfügung steht, kann der Hohlkörper auch einen gefalteten Kanal enthalten, beispielsweise einen mäanderförmig oder labyrinthförmig gestalteten Kanal. Somit kann geringe Bauhöhe bei ausreichendem Hohlraumvolumen erzeugt werden.

Für den Aufbau des geeigneten Gegendrucks an der abluftschachtseitigen Öffnung ist in der Erfindung ein im Abluftschacht angeordneter Lüfter verantwortlich. Es kann aber auch ein anderer Lüfter verwendet werden, der insbesondere auch an einer anderen Stelle im Gargerät angeordnet ist, und bei dessen Betrieb ein ausreichender Gegenluftdruck an der abluftschachtseitigen Öffnung des Hohlkörpers erzeugt wird. Jedenfalls entsteht bei Betrieb des Lüfters der gewünschte Gegendruck an der Öffnung zum Hohlkörper hin, vorzugsweise in der Grössenordnung zwischen 2 Pa und 500 Pa, der zumindest ein Grossteil des in den Hohlkörper strömenden Wasserdampfs nicht sofort in den Abluftschacht abströmen lässt. Ist also der durch den Lüfter aufgebaute Gegendruck grösser bemessen als der im Garraum herrschende Druck, und herrscht aber relativ zur Umgebung des Gargeräts Überdruck im Garraum vor, so strömt Wasserdampf in den Hohlkörper und verbleibt zunächst dort, solange nicht der Druck im Hohlkörper und damit der Druck im Garraum den durch den Lüfter erzeugten Druck übersteigt. Vorzugsweise ist also der Lüfter zumindest in Betrieb, wenn dem Garraum Dampf zugeführt wird und/oder nach dem Zuführen vom Dampf in den Garraum.

Der Lüfter ist als Radiallüfter ausgebildet, bei dem typischerweise Luft parallel zu einer Antriebsachse der Radiallüfters angesaugt wird und radial zur Antriebsachse wieder abgegeben wird.

Die Steuerung ihrerseits steuert nun die Zufuhr von Dampf in den Garraum in Abhängigkeit des gemessenen Parameters. Die Steuerung ist dabei ausgebildet zum Vermindern einer Gaszufuhr für den Fall, dass der gemessene Parameter einen Schwellwert übersteigt. Nach ausreichend Zufuhr von Dampf kann im Garraum ein Überdruck entstehen und heisser Wasserdampf durch die Öffnung im Garraum in den Hohlkörper entweichen. Dieser Zustand kann mit dem Sensor aufgenommen und durch eine geeignete Auswertung erkannt werden. Dieser Zustand wird erkannt, wenn der gemessene Parameter, beispielsweise die Temperatur des durch die Öffnung strömenden Wasserdampfs einen Grenzwert übersteigt.

Als Reaktion darauf wird die Zufuhr von Dampf durch die Steuerschaltung vermindert auf eine Dampfzufuhr geringerer Ausprägung, oder als Spezialfall der Minderung gänzlich unterbrochen, d.h. auf Null gesetzt. Die Steuerschaltung kann dies durch eine geeignete Steuerung des Dampferzeugers bewirken oder aber durch Steuerung eines Ventils in einer Zuführleitung für den erzeugten Wasserdampf in den Garraum. Insofern wird die Energiezugabe in den Garraum vermindert, so dass nicht noch mehr Dampf oder Wrasen aus dem Garraum entweicht.

Zumindest während des Betriebs der verminderten Gaszufuhr ist der Radiallüfter in Betrieb, um den Gegendruck am Hohlkörperausgang zu erzeugen. Aufgrund der verminderten Dampfzufuhr absorbiert das Gargut die noch vorhandene Energie im Garraum in Form von warmem Wasserdampf, das Gargut kühlt möglicherweise bereits ab, und der Druck im Garraum sinkt wieder. Dadurch strömt der im Hohlraum vorhandene Wasserdampf / Wrasen wieder zurück in den Garraum und verhilft dem Gargut zu einem fortdauernden Garen, ohne dass dafür neuer Wasserdampf unter Einsatz von Energie im Dampferzeuger erzeugt werden müsste. Damit gestaltet sich das erfindungsgemässe Gargerät sparsamer im Energieverbrauch.

Ein Vermindern der Dampfzufuhr in den Garraum kann umfassen ein oder mehrere der folgenden Steueraktionen:
Ein Ausschalten des Dampferzeugers;
Ein Erniedrigen der Leistung des Dampferzeugers;
Ein Verkürzen einer verbleibenden Zeitdauer eines Betriebs des Dampferzeugers;
Ein Sperren eines Ventils in einer Dampfzufuhrleitung in den Garraum;
Ein Verringern der Durchflussmenge in einer Dampfzufuhrleitung in den Garraum mittels eines Proportionalventils;
Ein Verringern der Taktung eines AN/AUS-Ventils in einer Dampfzufuhrleitung in den Garraum;
Ein Umleiten des erzeugten Dampfes ins Freie; o.ä.

Die Steuerung kann in vorteilhaften Weiterbildungen ausgebildet sein zum Steuern der Dampfzufuhr abhängig von einem oder mehreren der folgenden Ereignisse, auch Auslöseereignisse oder Triggerereignisse genannt:
Ein Überschreiten eines Schwellwerts durch den gemessenen Parameter - welcher Parameter typischerweise als Sensorsignal vorverarbeitet und an die Steuerung übertragen wird;
Ein Unterschreiten eines Schwellwerts durch den gemessenen Parameter;
Ein Über- oder Unterschreiten eines Schwellwerts durch einen Gradienten des gemessenen Parameters;
Einem Muster im gemessenen Parameter, o.ä.

Ist der Sensor im Hohlkörper angeordnet, so zeigt er typischerweise den Grad des Dampfzustands im Garraum mittelbar an, da je mehr Dampf sich im Garraum befindet, desto mehr Dampf durch die Öffnung austreten wird. Andererseits wird kaum Dampf durch die Öffnung austreten, wenn erst wenig Dampf im Garraum ist oder erst wenig Dampf dem Garraum zugeführt wurde. Die quantitative Erfassung des austretenden Dampfes mag abhängen von den Druckbedingungen, die am Ausgang der Öffnung herrschen und weiteren Einflussgrössen, die den Innendruck im Garraum bestimmen.

Gemäss einem weiteren Aspekt der Erfindung umfasst ein Verfahren zum Betreiben eines Gargerätes zum Garen von Gargut das Zuführen von von einem Dampfgenerator erzeugtem Dampf in einen Garraum des Gargeräts, welcher Garraum über einen Hohlkörper mit einem Abluftschacht verbunden ist. Ein Parameter von durch eine Öffnung aus einem Garraum in den Hohlkörper austretendem Dampf oder von Dampf im Garraum wird gemessen. Die Zufuhr von Dampf in den Garraum wird gesteuert in Abhängigkeit von dem gemessenen Parameter. Die Erzeugung von Dampf wird gemindert, wenn der gemessene Parameter einen Grenzwert übersteigt. Zudem wird ein Radiallüfter zumindest während der geminderten Dampfzufuhr zum Erzeugen eines statischen Drucks bezüglich des Gases im Hohlraum betrieben. Dabei erzeugt der Radiallüfter bevorzugt einen statischen Druck zwischen 2 Pa und 500 Pa bezüglich des Gases im Hohlraum.

Vorteilhafte Weiterbildungen der Erfindung sind durch die Unteransprüche gekennzeichnet.

Weiterbildungen, die in Zusammenhang mit dem Gargerät ausdrücklich offenbart sind, seien auch als zum Verfahren zugehörig offenbart anzusehen, und umgekehrt.

### Kurze Beschreibung der Zeichnungen

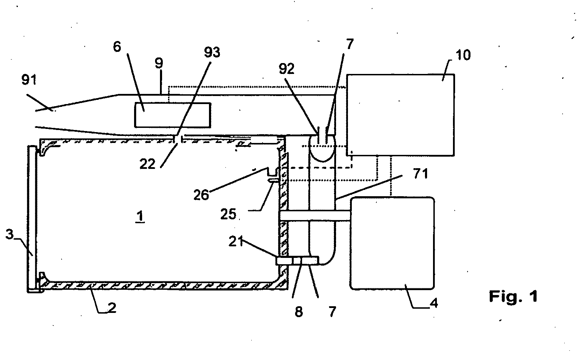

Weitere Ausgestaltungen, Vorteile und Anwendungen der Erfindung ergeben sich aus den abhängigen Ansprüchen und aus der nun folgenden Beschreibung anhand der Figur 1, die einen Längsschnitt durch ein Gargerät nach einem Ausführungsbeispiel der Erfindung zeigt.

### Weg(e) zur Ausführung der Erfindung

Das Gargerät gemäss Fig. 1 umfasst einen Garraum 1, der von Wänden 2 und einer Türe 3 begrenzt wird. Der Garraum mag beispielsweise 50 Liter und mehr umfassen, beispielsweise 56 Liter. Das Gargerät enthält einen schematisch eingezeichneten und vom Garraum 1 separierten Dampfgenerator 4, dessen Dampf über eine Zuleitung dem Garraum 1 zugeführt wird.

Oberhalb des Garraums 1 ist ein Radiallüfter 6 als Gebläse in einem horizontal ausgerichteten Abluftschacht 9 angeordnet. Rückwärtig steht der Abluftschacht 9 über der Garraum 1 über und weist an der Unterseite dieses Überstands eine Öffnung 92 auf, an die ein Hohlkörper 7 in Form eines Schlauches angeschlossen ist. Der Schlauch ist mittels einer Isolierung 71 wärmeisoliert. Der Schlauch mündet in eine Öffnung 21 des Garraums 1, die zur Rückseite des Garraums 1 im unteren Bereich der dortigen Seitenwand 2 vorgesehen ist.

Das Gargerät besitzt einen schematisch eingezeichneten Sensor 8 zum Messen eines Dampfaustritts aus dem Garraum 1. Dieser Sensor 8 ist im vorliegenden Fall ein Temperatursensor beispielsweise in Form eines NTC-Widerstands und ist im unteren Abschnitt des Schlauches 7 angeordnet, um die Temperatur des an diese Stelle durchtretenden Wasserdampfes zu messen. Der Sensor 8 dient insofern als Klimasensor zum Rückschliessen auf das Klima im Garraum 1.

Im Betrieb des Gargeräts ist der Radiallüfter 6 vorzugsweise permanent in Betrieb. Dabei saugt er Luft durch nicht gezeigte Öffnungen in einer oberen Wand des Abluftschachts 9 aus der Umgebung an. Diese Luft verlässt das Gargerät wiederum durch die Austrittsöffnung 91. Da der Abluftschacht 9 gegen die Austrittsöffnung 91 hin verjüngt ist, entsteht dabei im Inneren des Abluftschachts 9 ein leichter Überdruck, d.h. ein Druck, der höher als der Umgebungsdruck ist. Dieser Überdruck wirkt auch an der Öffnung 92 des Abluftschachts 9 und wirkt damit einem Gas im Hohlkörper 7 entgegen. Damit muss auch im Garraum 1 ein gewisser Überdruck entstehen, damit eine Temperaturerhöhung am Sensor 8 festgestellt werden kann, die auf einen Gas- / Dampfaustritt durch die Öffnung 21 des Garraums 1 schliessen lässt. Eine andere Aufgabe des Radiallüfters 6 besteht darin, zur Kühlung des Gargeräts die Luft, die sich an der Aussenseite des Garraums 1 erwärmt hat, nach aussen abzuführen.

Zum Steuern des Dampfgenerators 4, des Radiallüfters 6, und weiterer Komponenten des Gargeräts ist eine Steuerung 10 vorgesehen, die unter anderem das von dem Sensor 8 abgegebene Temperatursignal überwacht. Der Dampfgenerator 4 wird grundsätzlich gesteuert wie folgt: Wird an einer Bedieneinheit, beispielsweise in Form eines Wahlschalters, ein Garbetrieb durch den Benutzer eingestellt, der ein Dampfgaren zumindest mit umfasst, so wird der Dampfgenerator 4 eingeschaltet und der erzeugte Dampf dem Garraum 1 zugeführt. Aufgrund obiger Ausführungen wird das Austreten vom Dampf aus dem Garraum 1 erschwert durch die durch den Radiallüfter 6 erzeugten Druckverhältnisse an der Öffnung 92 des Abluftschachtes 9, wobei der vorliegende Radiallüfter 6 vorzugsweise permanent eingeschaltet ist. Insofern wird erst ab einem Dampfdruck im Garraum 1, der grösser ist als der Umgebungsdruck, Dampf durch die Öffnung 21 im Garraum 1 entweichen, welcher Dampf dann durch einen Temperaturanstieg am Sensor 8 erkannt und quantitativ aufgenommen werden kann. Übersteigt die gemessene Temperatur Tx einen ersten Schwellwert T1, so wird der Dampfgenerator 4 wieder abgeschaltet. Es ist dann davon auszugehen, dass zu diesem Zeitpunkt im Garraum 1 ausreichend Dampf zum Garen des Garguts vorhanden ist.

Das Temperatursignal des Sensors 8, oder in allgemeiner Form das Gasaustrittsignal des Gasaustrittsensors, wird vorzugsweise aber noch zu weiteren Zwecken verwendet: So kann beispielsweise dem Dampfgenerator 4 Energie zugeführt werden, wenn die Temperatur Tx am Sensor 8 wieder unter einen unteren Schwellenwert Tu fällt, wobei vorzugsweise Tu<T1.

Auch kann eine weitere, verschliessbare Öffnung 22 im Garraum 1 optional geöffnet werden, wenn die Temperatur Tx am Temperatursensor 18 über einen oberen Schwellwert To steigt, so dass dem Garraum 1 weiterer Dampf über diese weitere Öffnung 22 entzogen wird. entzogen wird, siehe auch EP1619443A1.

Im Garraum 1 kann ferner ein Garraumtemperatur-Sensor 25 vorgesehen sein, mit welchem die Temperatur im Garraums 1 gemessen werden kann. Weiter kann auch ein Kerntemperatur-Sensor vorhanden sein (nicht gezeigt), beispielsweise in Form einer Nadel, die in das Gargut gestochen werden kann.

Die Dampferzeugung beziehungsweise Dampfzufuhr kann alternativ auch durch einen Feuchtesensor 26 im Garraum 1 gesteuert werden, der die relative Feuchte im Garraum 1 aufnimmt.

Nach dem Ausschalten des Dampfgenerators 4 bedingt durch das Überschreiten eines Schwellwerts durch die vom Sensor 8 gemessene Temperatur absorbiert das Gargut weiter Energie; der Druck im Garraum fällt wieder ab. Der Radiallüfter 6 ist während Phase mit verminderter Dampfzufuhr durchgängig in Betrieb und erhält den Gegendruck an der Öffnung 92 aufrecht. Fällt nun der Druck im Garraum 1, so wird der im Hohlkörper 7 vorhandene warme Wasserdampf zurück in den Garraum 1 gesogen und dient damit dem weiteren Garen des Garguts. Zu einem weiteren Zeitpunkt mag aber der im Garraum 1 vorhandene Dampf nicht mehr ausreichend sein, um das Gargut bestimmungsgemäss zu garen. Ab diesem Zeitpunkt kann durch die Steuerung 10 der Dampferzeuger 4 wieder eingeschaltet werden, um dem Garraum 1 neuen Dampf zuzuführen. Eine solche Zugabe von Dampf wird beispielsweise ebenfalls durch den Sensor 8 initiiert, beispielsweise für den Fall, dass die gemessene Temperatur einen zugehörigen Schwellwert Tu unterschreitet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Gargerät zum Garen von Gargut, mit
einem Garraum (1) zur Aufnahme des Garguts,
einem Dampfgenerator (4) zum Zuführen von Dampf in den Garraum (1),
einer Öffnung (21) im Garraum (1) zum Ermöglichen eines Austritts von Dampf aus dem Garraum (1),
einem Hohlkörper (7), der über die Öffnung (21) mit dem Garraum (1) verbunden ist zum Aufnehmen und zumindest temporärem Speichern von aus dem Garraum (1) austretendem Dampf, bei dem der Hohlkörper (7) ein Volumen von grösser oder gleich 40 cm3 aufweist,
einem Abluftschacht (9) und mit einer Öffnung (92) im Abluftschacht (9), über die der Abluftschacht (9) mit dem Hohlkörper (7) verbunden ist, sodass der Hohlkörper (7) den Garraum (1) mit dem Abluftschacht (9) verbindet,
einem Radiallüfter (6) zum Erzeugen eines Gegenluftdrucks an der mit dem Hohlkörper (7) verbundenen Öffnung (92) des Abluftschachts (9),
einem Sensor (8) zum Messen eines Parameters von durch die Öffnung (21) aus dem Garraum (1) austretendem Dampf oder mit einem Sensor (8) zum Messen eines Parameters von Dampf im Garraum,
einer Steuerung (10) zum Steuern einer Dampfzufuhr in den Garraum (1) abhängig von dem gemessenen Parameter,
bei dem die Steuerung (10) ausgebildet ist zum Mindern der Zufuhr von Dampf, wenn der gemessene Parameter einen Grenzwert übersteigt, und
bei dem der Radiallüfter (6) zumindest während der geminderten Dampfzufuhr betrieben wird zum Erzeugen eines statischen Gegenluftdrucks bezüglich des Gases im Hohlraum (7).

2. Gargerät nach Anspruch 1,
bei dem der Hohlkörper (7) ein Schlauch ist.

3. Gargerät nach Anspruch 1 oder Anspruch 2,
bei dem der Hohlkörper (7) wärmeisoliert ist gegen den Garraum (1) und/oder gegen ein Gehäuse des Gargeräts.

4. Gargerät nach einem der vorhergehenden Ansprüche,
bei dem der Hohlkörper (7) einen gefalteten Kanal aufweist.

5. Gargerät nach einem der vorhergehenden Ansprüche,
bei dem der Hohlkörper (7) mindestens ein wärmespeicherndes Element aufweist.

6. Gargerät nach einem der vorhergehenden Ansprüche,
bei dem der Garraum (1) Seitenwände aufweist und die Öffnung (21) in einer der Seitenwände angeordnet ist, und
insbesondere bei dem die Öffnung (21) in einer auf eine Höhe der Seitenwand bezogenen unteren Hälfte der Seitenwand angeordnet ist.

7. Gargerät nach einem der vorhergehenden Ansprüche 1 bis 5,
bei dem der Garraum (1) eine Decke aufweist und die Öffnung (21) in der Decke angeordnet ist.

8. Gargerät nach Anspruch 1,
bei dem der Abluftschacht (9) oberhalb des Garraums (1) angeordnet ist, und
bei dem der Radiallüfter (6) im Abluftschacht (9) angeordnet ist.

9. Gargerät nach Anspruch 1,
bei dem der Sensor (8) zum Messen eines Parameters von durch die Öffnung (21) aus dem Garraum (1) austretendem Dampf im Hohlkörper (7) angeordnet ist, und
insbesondere bei dem der Sensor (8) einen Temperaturfühler zum Messen einer Temperatur (Tx) von durch die Öffnung (21) austretendem Dampf enthält.

10. Verfahren zum Betreiben eines Gargerätes zum Garen von Gargut,
bei dem von einem Dampfgenerator (4) erzeugter Dampf einem Garraum (1) zugeführt wird, welcher Garraum (1) über einen Hohlkörper (7) mit einem Abluftschacht (9) verbunden ist,
bei dem der Hohlkörper (7) ein Volumen von grösser oder gleich 40 cm3 aufweist und aus dem Garraum (1) austretenden Dampf aufnimmt und zumindest temporär speichert,
bei dem ein Parameter von durch eine Öffnung (21) aus dem Garraum (1) in den Hohlkörper (7) austretendem Dampf oder von Dampf im Garraum (1) gemessen wird,
bei dem die Zufuhr von Dampf in den Garraum (1) gesteuert wird in Abhängigkeit von dem gemessenen Parameter,
bei dem die Zufuhr von Dampf gemindert wird, wenn der gemessene Parameter einen Grenzwert übersteigt, und
bei dem ein Radiallüfter (6) zumindest während der geminderten Dampfzufuhr betrieben wird zum Erzeugen eines statischen Gegenluftdrucks bezüglich des Gases im Hohlraum (7).

## Claims

1. Cooking device for cooking food, with
a cooking space (1) for receiving the food,
a steam generator (4) for supplying steam into the cooking space (1),
an opening (21) in the cooking space (1) for enabling an escape of steam out of the cooking space (1),
a hollow body (7) which is connected to the cooking space (1) via the opening (21) for receiving and at least temporary storing the steam coming out of the cooking space (1), wherein the hollow body (8) has a volume equal to or greater than 40 cm3,
an exhaust shaft (9) and with an opening (92) in the exhaust shaft (9), via which the exhaust shaft (9) is connected to the hollow body (7), such that the hollow body (7) connects the cooking space (1) with the exhaust shaft (9),
**characterized in that** the cooking device furthermore comprises
a radial fan (6) for generating a counter air pressure at the opening (92) of the exhaust shaft (9) connected to the hollow body (7),
a sensor (8) for measuring a parameter of steam escaping the cooking space (1) through the opening (21) or with a sensor (8) for measuring a parameter of steam inside the cooking space,
a controller (10) for controlling a steam supply into the cooking space (1) depending on the measured parameter,
wherein the controller (10) is adapted to lower the steam supply when the measured parameter exceeds a threshold value, and
wherein the radial fan (6) is operated at least during the lowered steam supply for generating a static counter air pressure with respect to the gas inside the hollow space (7).

2. Cooking device according to claim 1, wherein the hollow body (7) is a hose.

3. Cooking device according to claim 1 or claim 2, wherein the hollow body (7) is heat-insulated towards the cooking space (1) and/or towards a housing of the cooking device.

4. Cooking device according to one of the preceding claims, wherein the hollow body (7) has a folded channel.

5. Cooking device according to one of the preceding claims, wherein the hollow body (7) has at least a heat accumulating element.

6. Cooking device according to one of the preceding claims, wherein the cooking space (1) has side walls and the opening (21) is arranged in one of the side walls, and
particularly wherein the opening (21) is arranged in a bottom half of the side wall with respect to a height of the side wall.

7. Cooking device according to one of the claims 1 to 5, wherein the cooking space (1) has a cover and the opening (21) is arranged in the cover.

8. Cooking device according to claim 1, wherein the exhaust shaft (9) is arranged above the cooking space (1), and
wherein the radial fan (6) is arranged inside the exhaust shaft (9).

9. Cooking device according to claim 1, wherein the sensor (8) for measuring a parameter of steam escaping the cooking space (1) through the opening (21) is arranged inside the hollow body (7), and
particularly wherein the sensor (8) contains a temperature sensor for measuring a temperature (Tx) of steam escaping through the opening (21).

10. Method for operating a cooking device for cooking food,
wherein steam generated by a steam generator (4) is supplied to a cooking space (1), the cooking space (1) being connected with an exhaust shaft (9) via a hollow body (7),
wherein the hollow body (7) has a volume equal to or greater than 40 cm3 and receives and temporarily stores steam coming out of the cooking space (1),
wherein a parameter of steam escaping the cooking space (1) through an opening (21) into the hollow body (7) or of steam inside the cooking space (1) is measured,
wherein the supply of steam into the cooking space (1) is controlled depending on the measured parameter,
wherein the supply of steam is decreased when the measured parameter exceeds a threshold value, and
wherein the radial fan (6) is operated at least during the decreased steam supply for generating a static counter air pressure with respect to the gas in the hollow space (7).

## Revendications

1. Appareil de cuisson pour la cuisson des aliments, avec
un espace de cuisson (1) pour recevoir les aliments,
un générateur de vapeur (4) pour alimenter de la vapeur dans l'espace de cuisson (1),
une ouverture (21) dans l'espace de cuisson (1) pour permettre une évacuation de vapeur hors l'espace de cuisson (1),
un corps creux (7) connecté avec l'espace de cuisson (1) par l'ouverture (21) pour recevoir et accumuler au moins temporairement la vapeur qui sort de l'espace de cuisson (1), dans lequel le corps creux (7) ayant un volume supérieur ou égal à 40 cm3,
un puit de sortie d'air (9) et avec une ouverture (92) dans le puit de sortie d'air (9), par l'intermédiaire duquel le puit de sortie d'air (9) est connecté avec le corps creux (7), de sorte que le corps creux (7) connecte l'espace de cuisson (1) avec le puit de sortie d'air (9),
**caractérisé en ce que** l'appareil de cuisson comprend en outre
un ventilateur radial (6) pour générer une contrepression d'air à l'ouverture (92) du puit de sortie d'air (9) connectée avec le corps creux (7),
un capteur (8) pour mesurer un paramètre de vapeur qui s'échappe de l'espace de cuisson (1) à travers l'ouverture (21) ou avec un capteur (8) pour mesurer un paramètre de vapeur à l'intérieur de l'espace de cuisson,
une commande (10) pour commander une alimentation de vapeur dans l'espace de cuisson (1) dépendant du paramètre mesuré,
la commande (10) étant adaptée à réduire l'alimentation de vapeur quand le paramètre mesuré dépasse une valeur limite, et
le ventilateur radial (6) étant opéré au moins pendant l'alimentation réduite de vapeur afin de générer une statique contrepression d'air par rapport au gaz à l'intérieur de l'espace creux (7).

2. Appareil de cuisson selon la revendication 1, le corps creux (7) étant un tuyau.

3. Appareil de cuisson selon la revendication 1 ou la revendication 2, le corps creux (7) étant thermiquement isolé vers l'espace de cuisson (1) et/ou vers une carcasse de l'appareil de cuisson.

4. Appareil de cuisson selon l'une des revendications précédentes, le corps creux (7) ayant un canal plié.

5. Appareil de cuisson selon l'une des revendications précédentes, le corps creux (7) ayant au moins un élément d'accumulation de chaleur.

6. Appareil de cuisson selon l'une des revendications précédentes, l'espace de cuisson (1) ayant des parois latérales et l'ouverture (21) étant arrangée dans l'une des parois latérales, et
particulièrement l'ouverture (21) étant arrangée dans une moitié basse de la paroi latérale par rapport à une hauteur de la paroi latérale.

7. Appareil de cuisson selon l'une des précédentes 1 à 5, l'espace de cuisson ayant un couvercle et l'ouverture (21) étant arrangée à l'intérieur du couvercle.

8. Appareil de cuisson selon la revendication 1, le puit de sortie d'air (9) étant arrangé au-dessus de l'espace de cuisson (1), et le ventilateur radial (6) étant arrangé à l'intérieur du puit de sortie d'air (9).

9. Appareil de cuisson selon la revendication 1, le capteur (8) pour mesurer un paramètre de vapeur qui s'échappe de l'espace de cuisson (1) à travers l'ouverture (21) étant arrangée à l'intérieur du corps creux (7), et
particulièrement le capteur (8) contenant un capteur de température pour mesurer une température (Tx) de vapeur qui s'échappe à travers l'ouverture (21).

10. Procédé d'opération d'un appareil de cuisson pour cuire des aliments,
de la vapeur générée par un générateur de vapeur (4) étant alimentée dans un espace de cuisson (1), l'espace de cuisson (1) étant connecté avec un puit de sortie d'air (9) par un corps creux (7),
dans lequel le corps creux (7) ayant un volume supérieur ou égal à 40 cm3 et reçoit la vapeur sortant de l'espace de cuisson (1) et l'accumule au moins temporairement,
un paramètre de vapeur qui s'échappe de l'espace de cuisson (1) à travers une ouverture (21) dans le corps creux (7) ou de la vapeur à l'intérieur de l'espace de cuisson (1) étant mesuré,
l'alimentation de vapeur dans l'espace de cuisson (1) étant commandée dépendant du paramètre mesuré,
l'alimentation de vapeur étant réduite quand le paramètre mesuré dépasse une valeur limite, et
le ventilateur radial (6) étant opéré au moins pendant l'alimentation de vapeur réduite pour générer une contrepression d'air statique par rapport au gaz dans l'espace creux (7).
